# EUROPÄISCHE PATENTSCHRIFT

(11) **EP 1 112 012 B1**
(45) Veröffentlichungstag und Bekanntmachung des Hinweises auf die Patenterteilung: **10.07.2002**
(21) Anmeldenummer: 99944148.8
(22) Anmeldetag: 07.09.1999
(51) Int. Cl.: A47J 39/00

(54) **SERVIER- UND TRANSPORTAUFNAHME**
SERVING AND TRANSPORT RECEPTACLE
DISPOSITIF DE LOGEMENT POUR LE TRANSPORT ET L'AMENEE DES PLATS

(30) Priorität: 10.09.1998 AT 59898 U
(43) Veröffentlichungstag der Anmeldung: 04.07.2001
(73) Patentinhaber: Thermo Vision Entwicklungs- und Handels GmbH, 8074 Grambach/Graz (AT)
(72) Erfinder: KLINGER, Gerald, A-8043 Graz (AT)
(74) Vertreter: Köhler-Pavlik, Johann, Dipl.-Ing.
(86) Internationale Anmeldenummer: AT9900217
(87) Internationale Veröffentlichungsnummer: WO0015091

(56) Entgegenhaltungen:
- WO-A-90/02509
- DE-A- 19 528 973
- US-A- 3 904 778
- US-A- 4 110 587
- US-A- 4 491 233
- US-A- 4 560 859

## Beschreibung

Die Erfindung betrifft eine Servier- und Transportaufnahme, wie im Oberbegriff des Anspruches 1 beschrieben (vgl US 3904778 A).

Aus der DE 42 31 341 A1 ist eine Aufnahme für mindestens ein elektrisch beheizbares Speisengeschirr mit aus wärmeisolierenden Materialien gebildetem Unterteil, der mindestens eine Aussparung zur Aufnahme eines Speisengeschirrs aufweist und mit einem mit dem Unterteil kombinierbaren und verriegelbaren Oberteil, der ebenfalls aus wärmeisolierendem Material gebildet ist, bekannt. Der mit der Aussparung versehene Unterteil ist mit elektrischen Anschlußmitteln versehen, die mit in der Aussparung angeordneten Kontaktstücken leitungsverbunden sind und das auf das Unterseite des Geschirrs angeordnete Heizelement mit elektrischer Energie versorgen.

Aus der DE 25 43 667 A1 ist eine Vorrichtung zum Lagern, Kühlen und Aufheizen von einzelnen Nahrungsmitteln bekannt, die ein Tablett zur Aufnahme von mit Speisen befüllten Behältern und ein Regal zur Aufnahme zumindest eines Tabletts umfaßt, wobei das Regal Vorrichtungen zum Kühlen und Beheizen der Behälter aufweist und die Heizvorrichtungen im wesentlichen in Kontakt mit dem Boden des zu beheizenden Behälters treten, wozu das Tablett mit Positioniermittel und Öffnungen für die Behälter versehen ist. Diese Vorrichtung ermöglicht, solange sich das Tablett im Regal befindet, das wahlweise Kühlen oder Erwärrnen einzelner Behälter wie auch das Servieren der Speisen für den Verzehr bei Entnahme des Tabletts aus dem Regal mit den auf diesem abgestellten Behältern. Nachteilig dabei ist, daß unmittelbar aus dem Regal hraus das Servieren erfolgen muß, um ein Abkühlen der erwärmten Speisen zu vermeiden und damit die Mobilität beeinträchtigt ist.

Der Gegenstand der US 3 877 603 A betrifft ein Tablett zum gleichzeitigen Servieren von warmen und kalten Speisen insbesondere in Flugzeugen. Zur Senkung des Aufwands für das Servierpersonal besteht das Tablett aus einem starren Basisteil mit mindestens einer Aussparung zur Aufnahme von Kaltspeisen, Besteck od. dgl. und wärmebeständige Mittel zum Halten einer Vielzahl von Behältern für Warmspeisen, sowie mindestens eine weitere Aussparung am Basisteils zur Unterbringung der Haltemittel und Behälter für Warmspeisen. Vorteilhafterweise sind die Haltemittel in Form eines inneren Tabletts ausgebildet, welches an der oberen Fläche eine Vielzahl von Aussparungen zur Aufnahme der Behälter für die warmen Speisen aufweist. Vor dem Servieren werden die in der Halteeinrichtung angeordneten Warmspeisen aufgewärmt und danach am Tablett angeordnet. Die Warmspeisen können bis zur Ankunft beim Endverbraucher stark abkühlen. Als Abhilfe werden die Warmspeisen meist zu stark erwärmt was zu Geschmacksveränderungen führen kann.

Aufgabe der Erfindung ist es, eine Servier- und Transportaufnahme für in Speisengeschirr portionierte Speisen zu schaffen, mit der die Behälter sicher transportiert und das Warmhalten der Speisen bis unmittelbar vor dem Verzehr erreicht wird.

Diese Aufgabe der Erfindung wird durch die kennzeichnenden Merkmale des Anspruches 1 gelöst. Der überraschende Vorteil dabei ist, daß die Bereitstellung der Speisen in einem Serviervorgang sowohl für warme Speisen wie auch für weitere, vom Erwärmungs- bzw. Warmhaltevorgang nicht betroffene Speisen erfolgen kann und damit eine vielfältigere Menuezusammenstellung ermöglicht und eine Vereinfachung des Transport- und Serviervorganges erreicht wird.

Möglich ist eine Ausbildung nach Anspruch 2, wodurch eine formtechnisch einfache Fertigung zur Ausbildung des Basisteils der Servier- und Transportaufnahme erreicht wird.

Es ist aber auch eine Ausbildung nach Anspruch 3 vorteilhaft, weil dadurch eine sichere und lagerichtige Positionierung zwischen Basisteil und Tablett der Servier- und Transportaufnahme gegeben ist.

Es ist aber auch eine Ausbildung nach Anspruch 4 vorteilhaft, weil dadurch die Anwendung des Tabletts ohne Benutzung eines Basisteils bei gleichfalls gesicherter und lagerichtiger Positionierung des Speisengeschirrs am Tablett möglich ist.

Gemäß einer vorteilhaften Weiterbildung, wie in Anspruch 5 beschrieben, wird eine sehr variable, den jeweiligen Bedürfnissen angepaßte Bestückung der Servier- und Transportaufnahme mit unterschiedlichem Speisengeschirr erreicht.

Vorteilhaft ist aber auch eine Ausbildung nach Anspruch 6, wodurch für den Benutzer eine einfache Handhabung zum Lösen des Basisteils vom Tablett erreicht wird, aber auch eine benutzerkonforme Position beim Verzehr der Speisen unmittelbar aus dem im Basisteil befindlichen Speisengeschirr gegeben ist.

Möglich ist dabei eine Ausbildung nach Anspruch 7, weil dadurch eine kompakte Transporteinheit erreicht wird.

Gemäß einer vorteilhaften Weiterbildung, wie in Anspruch 8 beschrieben, wird eine zusätzliche Abstellfläche für Speisengeschirr geschaffen, um damit in einem Serviervorgang weitere Speisengänge, die einer Erwärmung bzw. Warmhaltung nicht bedürfen, serviert werden können.

Eine vorteilhafte Weiterbildung beschreibt aber auch Anspruch 9, wodurch den üblichen Massen des Speisengeschirrs Rechnung tragend, z.B. den unterschiedlichen Durchmessern des Speisengeschirrs für Hauptspeise, Zutaten etc. eine optimierte Raumform für den Basisteil und Deckteil erreicht wird.

Möglich ist dabei eine Ausbildung nach Anspruch 10, weil damit eine Transportsicherung durch verrutschsichere Positionierung eines außerhalb des Basisteils am Tablett abgestellten Speisengeschirrs erreicht wird.

Nach einer vorteilhaften Weiterbildung, wie in Anspruch 11 beschrieben, werden zusätzliche Bauteile eingespart und eine kostengünstige Ausbildung der Servier- und Transportaufnahme erzielt.

Es sind auch Ausbildungen gemäß den Ansprüchen 12 und 13 von Vorteil, wodurch eine individuelle Auslegung für unterschiedliche Versorgungssysteme erreicht wird.

Entsprechend den Merkmalen gemäß Anspruch 14 ist auch das unmittelbare Abstellen von erhitztem Speisengeschirr ohne nachteiliger Auswirkungen, auch z.B. mit Kunststoffbelag versehener Tischflächen, möglich und kann dadurch eine kostengünstige Serienfertigung und ein hoher Sicherheitsfaktor für den Benutzer erreicht werden.

Schließlich ist aber eine Ausbildung nach Anspruch 15 vorteilhaft, weil damit ein effizienter Energieeinsatz und hohe Stabilität für eine lange Nutzungsdauer bei geringem Leergewicht erreicht wird.

Zum besseren Verständnis der Erfindung wird diese anhand der in den Figuren dargestellten Ausführungsbeispiele näher beschrieben.

Es zeigen:
- Fig. 1: eine erfindungsgemäße Servier- und Transportaufnahme in Draufsicht, teilweise geschnitten,
- Fig. 2: die erfindungsgemäße Servier- und Transportaufnahme in Ansicht geschnitten gemäß den Linien 11-11 in Fig. 1,
- Fig. 3: die Servier- und Transportaufnahme in Ansicht geschnitten gemäß den Linien III-III in Fig. 1,
- Fig. 4: eine Detailansicht der erfindungsgemäßen Servier- und Transportaufnahme, geschnitten.

Einführend sei festgehalten, daß in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Mermalskombinationen aus den gezeigten und beschriebenen unterschiedlichen Ausführungsbeispielen für sich eigenständige, erfinderische oder erfindungsgemäße Lösungen darstellen.

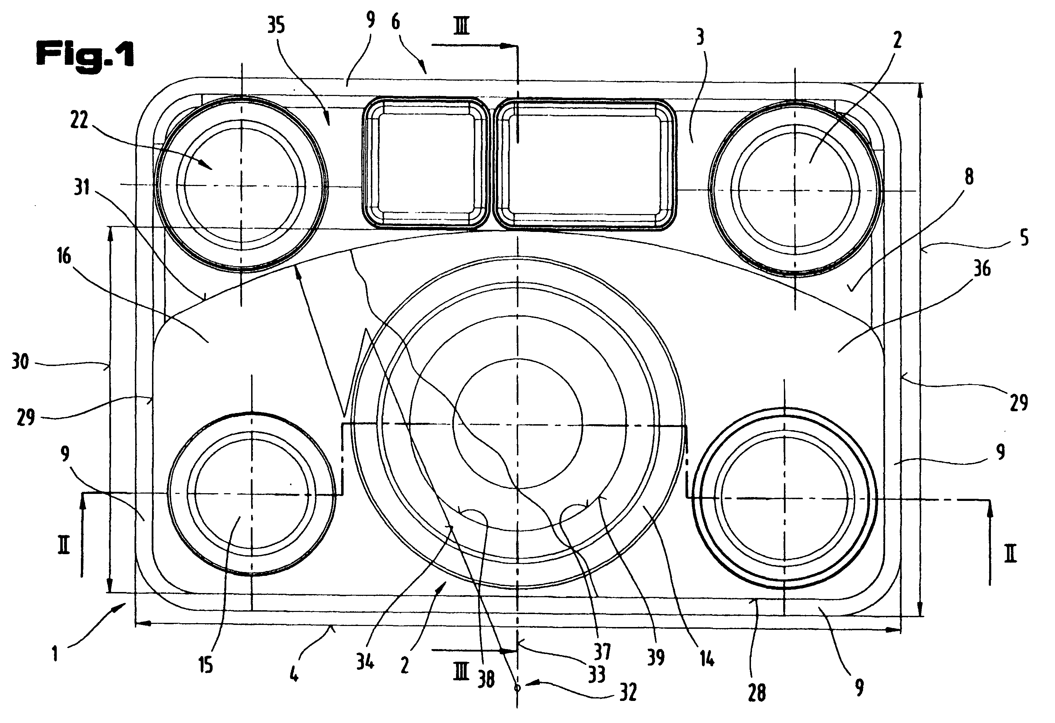

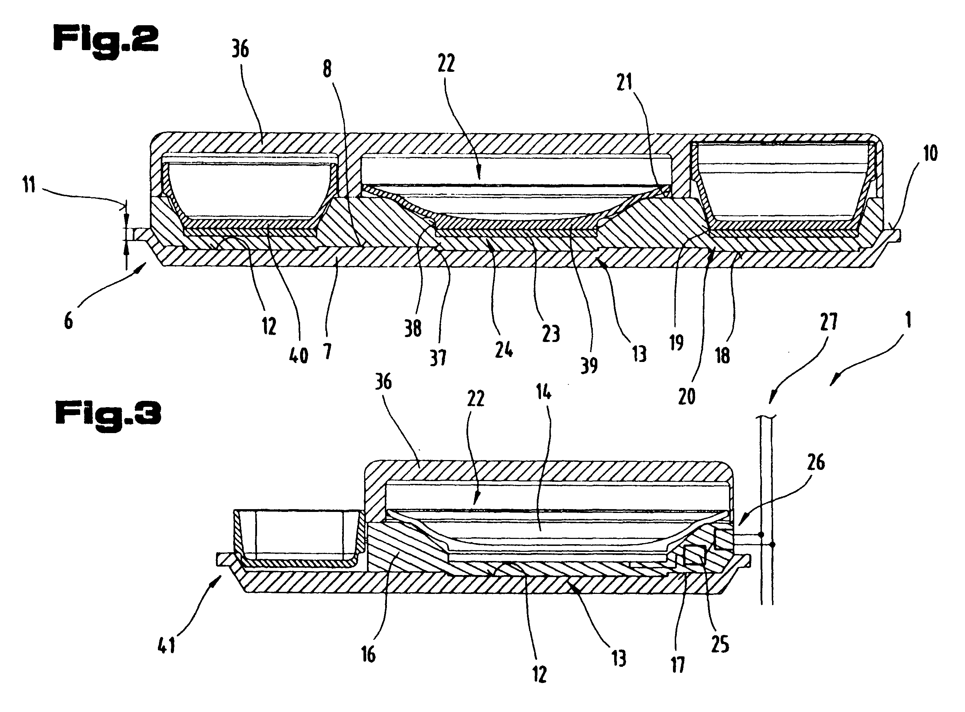

In den Fig. 1 bis 3 ist eine Servier- und Transportaufnahme 1 zur Aufnahme von unterschiedlichem Speisengeschirr 2 gezeigt. Die Servier- und Transportaufnahme 1 besteht aus einem Tablett 3, welches wannenförmig ausgebildet ist und bevorzugt aus einem Kunststofformteil gefertigt ist und bevorzugt ein rechteckiges Format mit einer Länge 4 und eine senkrecht dazu gemessene Breite 5 aufweist, die in etwa zwei Drittel der Länge 4 beträgt. Zur Erzielung einer Wannenform ist eine rundumlaufende Randausbildung 6 gegenüber einem Bodenteil 7 bzw. einer inneren Oberfläche 8 einen stumpfen Winkel ausbildend hochgezogen und in einer zur Oberfläche 8 parallelen Ebene verlaufenden Randleiste 9 endend. Zwischen einer Oberseite 10 der Randleiste 9 und der Oberfläche 8 ist somit eine Tiefe 11 ausgebildet und damit sichergestellt, daß bei möglichem Verschütten von Speisen aus dem Speisengeschirr 2 diese im Tablett 3 zurückgehalten werden.

In der Oberfläche 8 des Tabletts 3 sind bereichsweise bevorzugt durch Vertiefungen 12 ausgebildete Positionieraufnahmen 13 zur Lagerichtigen und lagesicheren Aufnahme des Speisengeschirrs 2 angeordnet. Desweiteren dienen derartige Positionieraufnahmen 13 zur rutschsicheren Aufnahme und lösbaren Halterung eines mit weiterem Speisengeschirr, z.B. einem Teller 14, einer Schüssel 15, insbesondere zur Aufnahme von zu erwärmenden oder warmzuhaltenden Speisen bestückbaren Basisteils 16, z.B. aus wärmeisolierendem Kunststoffmaterial. Eine der Oberfläche 8 des Tabletts 3 zugewandte Auflagefläche 17 des Basisteils 16 mit mit den Positionieraufnahmen 13 zusammenwirkenden Positioniermitteln 18 versehen, die mit den Positionieraufnahmen 13 in Eingriff stehen.

Die Positionieraufnahmen 13 und Positioniermittel 18 können bevorzugt mit einer elastisch verformbaren Randausbildung 19 versehen sein, wodurch Verbindungsmittel 20 geschaffen sind, durch welche der Basisteil 16 am Tablett 2 lösbar fixiert ist.

Selbstverständlich sind auch andere Arten von Rastelementen möglich, wobei vorteilhaft die Ausbildungen am Tablett 3 und/oder Basisteil 16 einstückig angeformt sind.

Der Basisteil 16 weist von einer Oberfläche 21 ausgehende Aussparungen 22 zur gesicherten Aufnahme des Speisengeschirrs 2, insbesondere des Tellers 14 und der Schüssel 15 auf, wobei in den Aussparungen 22 Mittel 23 zum Beheizen des Speisengeschirrs 2 vorgesehen sind. Die Mittel 23 zum Warmhalten bzw. Beheizen des Speisengeschirrs 2 bzw. der darin befindlichen Speisen können durch die üblichen aus dem Stand der Technik bekannten Einrichtungen, wie z.B. elektrisch angespeiste Heizplatten gebildet sein. Eine weitere, ebenfalls aus dem Stand der Technik bekannte Lösung für das Warmhalten bzw. Beheizen ist bei Verwendung eines speziellen Speisengeschirrs 2 gegeben, das in der Bodenfläche z.B. unter einer Glasurschichte ein band- oder flächenförmiges Heizelement aufweist und in der Aussparung 22 des Basisteiles 16 mit elektrischer Energie beaufschlagte Kontaktanordnungen vorgesehen sind, über die das Heizelement versorgt wird.

Selbstverständlich sind derartige Warmhalte- oder Heizeinrichtungen 24 mit einer Steuer- und Regeleinrichtung 25 und mit einem Interface 26 zur Aufnahme der elektrischen Energie von einer externen Energiequelle 27 ausgestattet und leitungsverbunden. Das Interface 26 des Basisteils 16 kann dem Tablett 3 zugewandt und mit einem auf diesem angeordneten Kontaktteil kuppelbar ausgeführt sein.

Der Basisteil 16 ist im gezeigten Ausführungsbeispiel im Bereich einer Längsseitenkante 28 und rechtwinkelig dazu verlaufenden Querseitenkante 29 zwischen der in Richtung der Länge 4 verlaufenden Randleiste 9 und dazu im rechten Winkel verlaufenden Randleisten 9 umfaßt. Eine der Längsseitenkanten 28 entgegengesetzt eine Breite 30 festlegende Begrenzende 31 des Basisteils 16 ist kreisbogenförmig ausgebildet, wobei ein Mittelpunkt 32 des Kreisbogens auf einer die Länge 4 halbierenden Mittelachse 33 liegt und ein Radius 34 größer ist, als die maximale Breite 30 des Basisteils 16. Die Breite 30 ist kleiner als die Breite 5 des Tabletts 3, wodurch auf dem Tablett 3 ein freier Oberflächenbereich 35 für weiteres Speisengeschirr 2 verbleibt, in dem nicht zu erwärmende bzw. nicht warmzuhaltende Speisen enthalten sind. Selbstverständlich sind in der Oberfläche 8 im Oberflächenbereich 35 weitere auf das Speisengeschirr 2 abgestimmte Aussparungen 22 angeordnet, wodurch eine sichere verrutschfreie Ablage gewährleistet ist.

Wie den Figuren weiters zu entnehmen ist, ist der Basisteil 16 mit einem bevorzugt ebenfalls aus wärmeisolierenden Material gebildeten haubenförmigen Deckteil 36 abgedeckt, damit ein Warmhalten der Speisen über einen langem Zeitraum gewährleistet ist bzw. ein effizienter Energieeinsatz beim Erwärmen von Speisen erreicht wird.

Die als Positionieraufnahmen 13 vorgesehenen Vertiefungen 12 in der Oberfläche 8 des Tabletts 3, in denen der Basisteil 16 mit seinem die Auflage 17 überragenden Positioniermitteln 18 eingreift, sind deckungsgleich zu Basisflächen der Aussparungen 22 im Basisteil 16. Dadurch ist es möglich, das Speisengeschirr 2 auch ohne Verwendung des Basisteils 16 unmittelbar am Tablett 3 abzustellen und in den Positionieraufnahmen 13 rutschsicher und lagerichtig positioniert zu haltern. Dies wird weiters dadurch errreicht, daß eine Umrißform 37 der Vertiefung 12 einer Umrißform 38 eines Positionieransatzes 39 im Bereich eines Bodens 40 des Speisengeschirrs 2 entspricht.

Durch diese Ausbildung der Servier- und Transportaufnahme 1 wird ein sehr universeller Einsatz und eine umfangreiche Kombinationsmöglichkeit für das Bereitstellen, Erwärmen, Warmhalten und Servieren und selbstverständlich für den Transport erreicht. Vorteilhafterweise sind die Randausbildungen 6 des Tabletts 3 als Randleisten 9 zumindest im Bereich der Längsseitenkanten 28 in Form von in Längsrichtung verlaufenden Führungsleisten 41 augebildet, wodurch die Servier- und Transportaufnahme 1 für eine gesicherte Aufnahme und Halterung in einem Regal, Regalwagen etc. erreicht wird, in denen eine Vielzahl dieser Servier- und Transportaufnahmen 1 transportierbar sind.

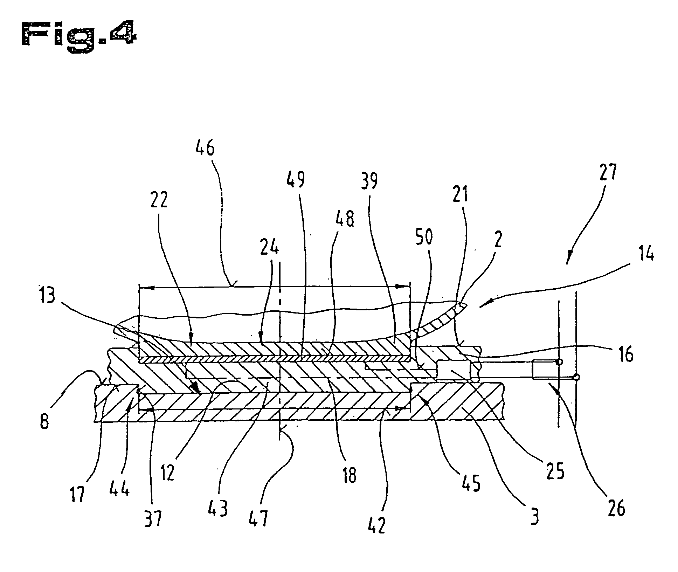

In Fig. 4 ist in einer Detailansicht, geschnitten, die Abstimmung in der Anordnung und Zuordnung der Positionieraufnahme 13 mit dem Positioniermittel 18 und der Aussparung 22 gezeigt. In der Oberfläche 8 des Tabletts 3 ist die die Positionieraufnahme 13 bildende Vertiefung 12 mit zum Beispiel kreisrunder Umrißforrn 37 mit Durchmesser 42 angeordnet. Die der Oberfläche 8 zugewandte Auflagefläche 17 des Basisteils 16 weist einen überragenden, das Positioniermittel 18 ausbildenden, scheibenförmigen Positionieransatz 43 auf, der der Umrißform 37 angepaßt ist. Rundumlaufende Seitenflächen 44 der Vertiefung 12 und des Positionieransatzes 43 sind gegebenenfalls zur lösbaren Verbindung zwischen Basisteil 16 und Tablett 3 mit elastisch verformbaren, ineinandergreifenden Rändern 45 versehen. Dadurch wird eine einfach zu lösende, einen sicheren Halt gewährleistende Verbindungseinrichtung zwischen Basisteil 16 und Tablett 3 geschaffen. In der Oberfläche 21 des Basisteils 16 ist die Aussparung 22 zur positionierten Aufnahme des Positionieransatzes 39 des Speisengeschirrs 2, z.B. Tellers 14, angeordnet, die ebenfalls kreisrund ausgeführt ist und einen Durchmesser 46 aufweist, der dem Durchmesser 42 der Positionieraufnahme 13 im Tablett 3 entspricht. In bezug auf eine senkrecht zur Oberfläche 8 verlaufende Mittelachse 47 sind die Aussparung 22 und Positionieraufnahme 13 konzentrisch zueinander angeordnet und hinsichtlich der Umrißformen 37, 38 deckungsgleich ausgebildet.

Dies ermöglicht nunmehr in sehr einfacher Weise einen gesicherten Transport und ein sicheres Servieren von Speisen in dem Speisengeschirr 2 mit dem Tablett 3 ohne Verwendung des Basisteils 16 vorzunehmen, da das Speisengeschirr 2 mit dem jeweiligen Positionieransatz 39 lagerichtig und verrutschsicher in der Positionieraufnahme 13 des Tabletts 3 gehaltert wird.

Es soll auch darauf verwiesen werden, daß die Formgebung der Aussparung 22 selbstverständlich jede andere Geometrie, abgestimmt auf das verwendete Speisengeschirr 2 aufweisen kann. Dementsprechend sind dann auch das Positioniermittel 18 des Basisteils 16 und die Positionieraufnahme 13 in der Oberfläche 8 des Tabletts 3 an diese Geometrie abgestimmt ausgebildet.

Wie nunmehr weiters der Fig. 4 zu entnehmen, ist in der Aussparung 22 und eine Auflagefläche 48 für das Speisengeschirr 2, z.B. Teller 14 ausbildend die Heizeinrichtung 24 als plattenförmiges Heizelement 49 angeordnet und zur Anspeisung mit elektrischer Energie über Leitungen 50 gegebenenfalls unter Zwischenschaltung der Steuer- und Regeleinrichtung 25 und über das Interface 26 mit der externen Energiequelle 27 während der Bereitstellung der Speisen bzw. des Transportes leitungsverbunden.

Der Ordnung halber sei abschließend darauf hingewiesen, daß zum besseren Verständnis des Aufbaus der Servier- und Transportaufnahme 1 diese bzw. deren Bestandteile teilweise unmaßstäblich und/oder vergrößert und/oder verkleinert dargestellt wurden.

Die den eigenständigen erfinderischen Lösungen zugrundeliegende Aufgabe kann der Beschreibung entnommen werden.

Vor allem können die einzelnen in den Fig. 1, 2, 3, 4 gezeigten Ausführungen den Gegenstand von eigenständigen, erfindungsgemäßen Lösungen bilden. Die diesbezüglichen, erfindungsgemäßen Aufgaben und Lösungen sind den Detailbeschreibungen dieser Figuren zu entnehmen.

## Patentansprüche

1. Servier- und Transportaufnahme (1) für mit portionierten Speisen befülltes Speisengeschirr (2) mit einem wärmeisolierend ausgebildeten und Aussparungen (22) aufweisenden Basisteil (16), der mit Mitteln (23) zum Beheizen des Speisengeschirrs (2) und einem Interface (26) zur Zuführung elektrischer Energie einer externen Energiequelle (27) versehen ist, und mit zumindest einem mit dem Basisteil (16) positionier- und kuppelbaren, wärmeisolierend ausgebildeten, haubenförmigen Deckteil (36), wobei eine Auflagefläche (17) des Basisteils (16) zumindest ein die Auflagefläche (17) überragendes Positioniermittel (18) aufweist, das mit einer Positionieraufnahme (13) in einer Oberfläche (8) eines den Basisteil (16) aufnehmenden Tabletts (3) in Eingriff steht, **dadurch gekennzeichnet, daß** der Basisteil (16) zur Aufnahme von mehreren Speisenbehälter (2) für Warmspeisen ausgebildet ist und an zumindest einer Längsseite in zusammengesetztem Zustand längs des Längsrandes des Tabletts (3) verläuft und einen von diesem hochstehenden Wandteil aufweist, in dessen Bereich das Interface (26) zur Zuführung elektrischer Energie angeordnet ist.

2. Servier- und Transportaufnahme nach Anspruch 1, **dadurch gekennzeichnet, daß** das Positioniermittel (18) durch zumindest einen die Auflagefläche (17) des Basisteils (16) überragenden, am Basisteil (16) einstückig angeformten Positionieransatz (43) gebildet ist.

3. Servier- und Transportaufnahme nach Anspruch 1 oder 2, **dadurch gekennzeichnet, daß** die Positionieraufnahme (13) durch eine in einer der Auflagefläche (17) des Basisteils (16) zugewandten Oberfläche (8) des Tabletts (3) angeordnete Vertiefung (12) gebildet ist, wobei eine Umrißform (37) der Vertiefung (12) entsprechend einem Hüllkreis des Positioniermittels (18) entspricht.

4. Servier- und Transportaufnahme nach einem oder mehreren der vorhergehenden Ansprüche, **dadurch gekennzeichnet, daß** der Positionieransatz (43) deckungsgleich zu der in einer Oberfläche (21) des Basisteils (16) angeordneten Aussparung (22) für einen Positionieransatz (39) des Speisengeschirrs (2) angeordnet ist.

5. Servier- und Transportaufnahme nach einem oder mehreren der vorhergehenden Ansprüche, **dadurch gekennzeichnet, daß** in der Oberfläche (21) des Basisteils (16) mehrere über die Oberfläche (8) verteilte Aussparungen (22) für Speisengeschirr (2) z.B. unterschiedlicher Größe und geometrischer Form angeordnet sind und deckungsgleich zu jeder der Aussparungen (22) ein die Auflagefläche (17) des Basisteils (16) überragender Positionieransatz (43) angeordnet ist, dem eine durch die Vertiefung (12) gebildete Positionieraufnahme (13) in der Oberfläche (8) des Tabletts (3) zugeordnet ist.

6. Servier- und Transportaufnahme nach einem oder mehreren der vorhergehenden Ansprüche, **dadurch gekennzeichnet, daß** das Tablett (3) wannenförmig ausgebildet ist und der Basisteil (16) und das Tablett (3) in etwa im Bereich von Längsseitenkanten (28) fluchtend miteinander verbunden sind.

7. Servier- und Transportaufnahme nach einem oder mehreren der vorhergehenden Ansprüche, **dadurch gekennzeichnet, daß** eine Länge (4) des Tabletts (3) in etwa einer Länge des Basisteils (16) entspricht.

8. Servier- und Transportaufnahme nach einem oder mehreren der vorhergehenden Ansprüche, **dadurch gekennzeichnet, daß** eine senkrecht zur Längsseitenkante (28) gemessene Breite (5) des Tabletts (3) größer ist als eine in diese Richtung gemessene Breite (30) des Basisteils (16).

9. Servier- und Transportaufnahme nach einem oder mehreren der vorhergehenden Ansprüche, **dadurch gekennzeichnet, daß** eine der Längsseitenkante (28) des Basisteils (16) entgegengesetzte Begrenzende (31) in etwa kreisbogenförmig ausgebildet ist, wobei ein Mittelpunkt (32) auf einer die Länge (4) des Tabletts (3) halbierenden Mittelachse (33) liegt und ein Radius (34) der Begrenzenden (31) größer ist als die maximale Breite (30) des Basisteils (16).

10. Servier- und Transportaufnahme nach einem oder mehreren der vorhergehenden Ansprüche, **dadurch gekennzeichnet, daß** in einer Oberfläche (8) des Tabletts (3) in dem den Basisteil (16) überragenden Oberflächenbereich (35) weitere Aussparungen (22) für Speisengeschirr (2) angeordnet sind.

11. Servier- und Transportaufnahme nach einem oder mehreren der vorhergehenden Ansprüche, **dadurch gekennzeichnet, daß** die Positioniermittel (18) und Positionieraufnahmen (13) des Basisteils (16) und des Tabletts (3) durch die Verbindungsmittel (20) bildende, am Tablett (3) und/oder Basisteil (16) einstückig angeformte Rastelemente ausgebildet sind.

12. Servier- und Transportaufnahme nach einem oder mehreren der vorhergehenden Ansprüche, **dadurch gekennzeichnet, daß** das Interface (26) zur Zuführung elektrischer Energie einer externen Energiequelle (27) mit einer Steuer- und Regeleinrichtung (25) leitungsverbunden ist.

13. Servier- und Transportaufnahme nach Anspruch 12, **dadurch gekennzeichnet, daß** die Steuer- und Regeleinrichtung (25) im Basisteil (16) angeordnet ist.

14. Servier- und Transportaufnahme nach einem oder mehreren der vorhergehenden Ansprüche, **dadurch gekennzeichnet, daß** das Tablett (3) und/oder der Basisteil (16) und/oder Deckteil (36) aus wärmeisolierendem Kunststoff gebildet ist.

15. Servier- und Transportaufnahme nach einem oder mehreren der vorhergehenden Ansprüche, **dadurch gekennzeichnet, daß** der Basisteil (16) und/oder Deckteil (36) aus wärmeisolierend beschichtetem Metall gebildet ist.

## Claims

1. A serving and transport receptacle (1) for food dishes (2) filled with portioned meals, including a base part (16) which is made to be heat-insulating and provided with recesses (22) as well as means (23) for heating the food dishes (2) and an interface (26) for feeding electric energy from an external energy source (27), and at least one hood-shaped cover part (36) which is made to be heat-insulating and capable of being positioned and coupled with the base part (16), wherein an accommodation surface (17) of the base part (16) includes at least one positioning means (18) rising above the accommodation surface (17) and engaging in a positioning seat (13) provided in a surface (8) of a tray (3) containing the base part (16), **characterized in that** the base part (16) is designed to hold a plurality of food containers (2) for hot meals and extends along the longitudinal rim of the tray (3) on at least one long side in the assembled state and comprises a wall part rising from the tray, in the region of which the interface (26) for feeding electric energy is arranged.

2. A serving and transport receptacle according to claim 1, **characterized in that** the positioning means (18) is formed by at least one positioning nose (43) rising above the accommodation surface (17) of the base part (16) and formed in one piece with the base part (16).

3. A serving and transport receptacle according to claim 1 or 2, **characterized in that** the positioning seat (13) is formed by a depression (12) provided in a surface (8) of the tray (3) facing the accommodation surface (17) of the base part (16), a contour shape (37) of the depression (12) being designed to correspond with an enveloping circle of the positioning means (18).

4. A serving and transport receptacle according to one or several of the preceding claims, **characterized in that** the positioning nose (43) is arranged in a manner congruent with the recess (22) provided in a surface (21) of the base part (16) for a positioning nose (39) of the food dish (2).

5. A serving and transport receptacle according to one or several of the preceding claims, **characterized in that** several recesses (22) for food dishes (2), which are distributed over the surface (8) and have, for instance, different sizes and geometric shapes, are provided in the surface (21) of the base part (16) and a positioning nose (43) rising above the accommodation surface (17) of the base part (16) is arranged in a manner congruent with each of said recesses (22), a positioning seat (13) formed by the depression (12) in the surface (8) of the tray (3) being allocated to said positioning nose.

6. A serving and transport receptacle according to one or several of the preceding claims, **characterized in that** the tray (3) is designed to be tub-shaped and the base part (16) and the tray (3) are alignedly connected with each other approximately in the region of long side edges (28).

7. A serving and transport receptacle according to one or several of the preceding claims, **characterized in that** a length (4) of the tray (3) approximately corresponds to a length of the base part (16).

8. A serving and transport receptacle according to one or several of the preceding claims, **characterized in that** a width (5) of the tray (3) measured perpendicular to the long side edge (28) is larger than a width (30) of the base part (16) measured in this direction.

9. A serving and transport receptacle according to one or several of the preceding claims, **characterized in that** a limiting line (31) opposite the long side edges (28) of the base part (16) approximately has the form of a circular arc with a center (32) being located on a central axis (33) bisecting the length (4) of the tray (3) and a radius (34) of the limiting line (31) being larger than the maximum width (30) of the base part (16).

10. A serving and transport receptacle according to one or several of the preceding claims, **characterized in that** additional recesses (22) for food dishes (2) are provided in a surface (8) of the tray (3), in the surface region (35) rising above the base part (16).

11. A serving and transport receptacle according to one or several of the preceding claims, **characterized in that** the positioning means (18) and positioning seats (13) of the base part (16) and the tray (3) are comprised of latch elements formed in one piece with the tray (3) and/or the base part (16) and constituting the connection means (20).

12. A serving and transport receptacle according to one or several of the preceding claims, **characterized in that** the interface (26) for feeding electric energy from an external energy source (27) is line-connected with an adjustment and control means (25).

13. A serving and transport receptacle according to claim 12, **characterized in that** the adjustment and control means (25) is arranged in the base part (16).

14. A serving and transport receptacle according to one or several of the preceding claims, **characterized in that** the tray (3) and/or the base part (16) and/or the cover part (36) are made of a heat-insulating synthetic material.

15. A serving and transport receptacle according to one or several of the preceding claims, **characterized in that** the base part (16) and/or the cover part (36) are made of a heat-insulatingly coated metal.

## Revendications

1. Réceptacle de service et de transport (1) destiné à une vaisselle alimentaire (2) contenant des aliments en portions, avec un élément de base (16) réalisé dans une matière thermiquement isolante et comportant des évidements (22), qui est muni de moyens (23) pour le chauffage de la vaisselle alimentaire (2) et d'une interface (26) destinée à l'amenée d'énergie électrique d'une source d'énergie externe (27), et avec au moins un élément de couvercle (36) en forme de cloche réalisé dans une matière thermiquement isolante, qui peut être positionné sur, et couplé à, l'élément de base (16), une surface d'appui (17) de l'élément de base (16) comportant au moins un moyen de positionnement (18) faisant saillie au-dessus de la surface d'appui (17), lequel s'engage dans un logement de positionnement (13) pratiqué dans une surface (8) d'un plateau (3) recevant l'élément de base (16), **caractérisé en ce que** l'élément de base (16) est réalisé pour recevoir plusieurs récipients alimentaires (2) pour des aliments chauds et s'étend à l'état assemblé au niveau d'au moins un côté longitudinal le long du bord longitudinal du plateau (3), et comporte un élément de paroi remontant à partir de ce dernier, dans la zone duquel est disposée l'interface (26) destinée à l'amenée d'énergie électrique.

2. Réceptacle de service et de transport selon la revendication 1, **caractérisé en ce que** le moyen de positionnement (18) est constitué d'au moins un appendice de positionnement (43) faisant saillie au-dessus de la surface d'appui (17) de l'élément de base (16), qui est formé d'un seul tenant sur l'élément de base (16).

3. Réceptacle de service et de transport selon la revendication 1 ou 2, **caractérisé en ce que** le logement de positionnement (13) est formé par un renfoncement (12) pratiqué dans une surface (8) du plateau (3) orientée vers la surface d'appui (17) de l'élément de base (16), une forme de contour (37) du renfoncement (12) correspondant de façon appropriée à un cercle d'enveloppe du moyen de positionnement (18).

4. Réceptacle de service et de transport selon l'une ou plusieurs des revendications précédentes, **caractérisé en ce que** l'appendice de positionnement (43) est disposé de façon à coïncider avec l'évidement (22) pratiqué dans une surface (21) de l'élément de base (16) pour un appendice de positionnement (39) de la vaisselle alimentaire (2).

5. Réceptacle de service et de transport selon l'une ou plusieurs des revendications précédentes, **caractérisé en ce que** plusieurs évidements (22) répartis sur la surface (8) pour vaisselle alimentaire (2), par exemple de tailles et formes géométriques différentes, sont agencés dans la surface (21) de l'élément de base (16), et **en ce qu'**un appendice de positionnement (43) faisant saillie au-dessus de la surface d'appui (17) de l'élément de base (16) est disposé de façon à coïncider avec chacun des évidements (22), auquel est associé un logement de positionnement (13) formé par le renfoncement (12), pratiqué dans la surface (8) du plateau (3).

6. Réceptacle de service et de transport selon l'une ou plusieurs des revendications précédentes, **caractérisé en ce que** le plateau (3) est réalisé en forme de cuvette, et **en ce que**, sensiblement dans la zone de bords (28) de côtés longitudinaux, l'élément de base (16) et le plateau (3) sont reliés entre eux en alignement.

7. Réceptacle de service et de transport selon l'une ou plusieurs des revendications précédentes, **caractérisé en ce qu'**une longueur (4) du plateau (3) correspond sensiblement à une longueur de l'élément de base (16).

8. Réceptacle de service et de transport selon l'une ou plusieurs des revendications précédentes, **caractérisé en ce qu'**une largeur (5) du plateau (3) mesurée perpendiculairement au bord (28) du côté longitudinal est supérieure à une largeur (30) de l'élément de base (16) mesurée dans cette direction.

9. Réceptacle de service et de transport selon l'une ou plusieurs des revendications précédentes, **caractérisé en ce qu'**une délimitation (31) opposée à l'un des bords (28) des côtés longitudinaux de l'élément de base (16) est sensiblement réalisée en forme d'arc de cercle, un point central (32) étant situé sur un axe médian (33) bissecteur de la longueur (4) du plateau (3), et un rayon (34) de la délimitation (31) étant supérieur à la largeur maximale (30) de l'élément de base (16).

10. Réceptacle de service et de transport selon l'une ou plusieurs des revendications précédentes, **caractérisé en ce que**, dans la zone (35) de surface faisant saillie au-dessus de l'élément de base (16), d'autres évidements (22) pour vaisselle alimentaire (2) sont pratiqués dans une surface (8) du plateau (3).

11. Réceptacle de service et de transport selon l'une ou plusieurs des revendications précédentes, **caractérisé en ce que** les moyens de positionnement (18) et les logements de positionnement (13) de l'élément de base (16) et du plateau (3) sont réalisés par les éléments d'encliquetage formant des moyens de liaison (20), qui sont réalisés d'un seul tenant sur le plateau (3) et/ou sur l'élément de base (16).

12. Réceptacle de service et de transport selon l'une ou plusieurs des revendications précédentes, **caractérisé en ce que** l'interface (26) destinée à l'amenée d'énergie électrique d'une source d'énergie externe (27) est reliée par une ligne à une unité de commande et de régulation (25).

13. Réceptacle de service et de transport selon la revendication 12, **caractérisé en ce que** l'unité de commande et de régulation (25) est disposée dans l'élément de base (16).

14. Réceptacle de service et de transport selon l'une ou plusieurs des revendications précédentes, **caractérisé en ce que** le plateau (3) et/ou l'élément de base (16) et/ou l'élément de couvercle (36) sont réalisés en matière plastique thermiquement isolante.

15. Réceptacle de service et de transport selon l'une ou plusieurs des revendications précédentes, **caractérisé en ce que** l'élément de base (16) et/ou l'élément de couvercle (36) sont réalisés en métal revêtu d'une matière d'isolation thermique.
